# EUROPEAN PATENT SPECIFICATION

(11) **EP 4 020 972 B1**
(45) Date of publication and mention of the grant of the patent: **18.02.2026**
(21) Application number: 20859472.1
(22) Date of filing: 19.05.2020
(51) Int. Cl.: H04N 23/741, H04N 23/70, H04N 23/71, H04N 23/73, H04N 23/76

(54) **IMAGE CAPTURE DEVICE AND IMAGE CAPTURE METHOD**
BILDAUFNAHMEVORRICHTUNG UND BILDAUFNAHMEVERFAHREN
DISPOSITIF DE CAPTURE D'IMAGE ET PROCÉDÉ DE CAPTURE D'IMAGE

(30) Priority: 23.08.2019 JP 2019152527
(43) Date of publication of application: 29.06.2022
(73) Proprietor: Astemo, Ltd., Tokyo 100-0004 (JP)
(72) Inventor: SAKITA, Koichi, Tokyo 100-8280 (JP)
(74) Representative: Mewburn Ellis LLP
(86) International application number: PCT/JP2020/019826
(87) International publication number: WO 2021/038983

(56) References cited:
- JP-A- 2004 056 573
- JP-A- 2004 120 205
- JP-A- 2009 284 269
- JP-A- 2009 296 178
- JP-A- 2013 138 301
- US-A1- 2016 105 679
- US-B2- 10 136 080
- US-B2- 7 609 320
- US-B2- 9 531 958

## Description

### Technical Field

### [CROSS-REFERENCE TO RELATED APPLICATIONS]

This application is based upon and claims the benefit of priority from Japanese Patent Application No. 2019-152527, filed on August 23, 2019.

The present invention relates to an image capture device having a function of combining imaging signals having different exposure amounts or sensitivities to expand a dynamic range.

### Background Art

A high dynamic range (HDR) function is known in which a plurality of image signals with different exposure amounts such as aperture values and shutter times, or a plurality of image signals with different gains or sensitivities are combined to generate an image signal with less overexposure and underexposure and a wide dynamic range. Gradations of the combined HDR image signal have a larger number of bits than gradations of the individual signals before combination, and have been non-linearly compressed to an appropriate number of gradations so far because the image signal cannot be processed at a desired speed or cannot be displayed on a general display device for which input gradations have been defined.
US10136080B2 proposes an image generating apparatus wherein: an image combining unit combines, for each of first and second processes in sequence, first and second images to generate a composite image having a digital pixel value representing a luminance level of the corresponding pixel by a first bit width; a range setter sets, for each of the first and second processes, a target luminance-level distribution range of at least one target with respect to the composite image; the distribution range represents a range within which luminance levels of the at least one target are distributed; and a dynamic range adjuster adjusts a dynamic range of the composite image generated for one of the first and second processes such that the dynamic range of the composite image generated for the corresponding one of the first and second processes matches with the target luminance-level distribution range set for the first process.

### Citation List

### Patent Literature

PTL 1: JP 2018-77569 A
PTL 2: US 10 136 080 B2

### Summary of Invention

### Technical Problem

However, when combining a plurality of image signals with different exposure amounts or gains, decompression processing is first performed since it is necessary to smoothly connect an image signal with a large exposure amount or an image signal with a high gain, which is an original signal to be combined to a low signal level, to an image signal with a small exposure amount or an image signal with a low gain, which is an original signal to be combined to a high signal level after combination. Since such decompression processing also decompresses noise simultaneously with the signal, noise in a portion of a combined signal obtained by combining the original image signal with a small exposure amount or the original image signal with a low gain increases. This multiplied noise is reduced by compression processing, but the signal is excessively compressed at the same time, so that there is a problem that it is difficult for an image capture device, which recognizes or detects an object such as a person and the in-vehicle by image processing such as an in-vehicle camera, to recognize or detect the object.

The present invention has been made to solve the above-described conventional problems, and an object thereof is to provide an image capture device that achieves both HDR combination/compression and object recognition detection performance.

### Solution to Problem

In order to solve at least one of the above problems, in a first aspect there is provided an image capture device according to claim 1.
In a second aspect, there is provided an image capture method according to claim 6.

### Advantageous Effects of Invention

According to one mode of the present invention, a decrease in recognition/detection accuracy in the image capture device that recognizes or detects an object is suppressed. Further, noise that increases due to decompression during the combination can be efficiently compressed. Other objects, configurations, and effects which have not been described above become apparent from embodiments to be described hereinafter.

### Brief Description of Drawings

[FIG. 1] FIG. 1 is a block diagram illustrating a configuration of an image capture device according to a first embodiment of the present invention.
[FIG. 2] FIG. 2 is a graph illustrating an HDR combined signal and combined noise according to the first embodiment of the present invention.
[FIG. 3] FIG. 3 is graphs illustrating an HDR compressed signal and compressed noise according to the first embodiment of the present invention.
[FIG. 4] FIG. 4 is a block diagram illustrating a configuration of an image capture device according to a second embodiment of the present invention.
[FIG. 5] FIG. 5 is a graph illustrating an HDR combined signal and combined noise according to the second embodiment of the present invention.
[FIG. 6] FIG. 6 is graphs illustrating an HDR compressed signal and compressed noise according to the second embodiment of the present invention.
[FIG. 7] FIG. 7 is a view illustrating a method of controlling exposure using an exposure curve according to an embodiment of the present invention.

### Description of Embodiments

Hereinafter, image capture devices according to embodiments of the present invention will be described with reference to the drawings.

### [First Embodiment]

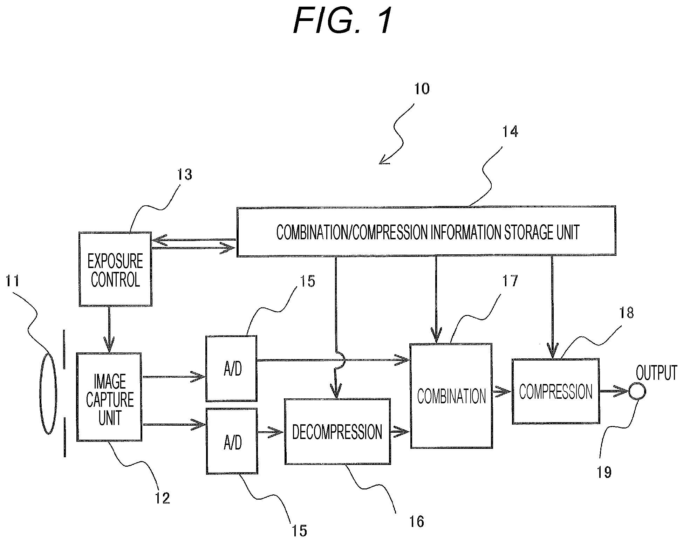

FIG. 1 is a block diagram illustrating a configuration of an image capture device 10 according to a first embodiment of the present invention.

The image capture device 10 includes a lens 11 including an optical lens and an aperture, an image capture unit 12 including an image capture element such as a CCD or CMOS sensor, and an exposure control unit 13 that adjusts the aperture of the lens 11 and a shutter time (that is, exposure time) and a gain of the image capture unit 12. The image capture unit 12 has a function of outputting a long shutter signal (imaging signal with a shutter for a long time) and a short shutter signal (imaging signal with a shutter for a short time) within one field period. A shutter time of the long shutter signal, a shutter time of the short shutter signal, and analog gain processing are controlled by the exposure control unit 13.

Further, the long shutter signal and the short shutter signal output from the image capture unit 12 are each converted into a 12-bit and 4096-gradation digital signal by an AD conversion circuit 15.

The long shutter signal and the short shutter signal each having a 12-bit length pass through a level adjustment unit 16 and are combined by an HDR combination unit 17 as one signal having a bit length longer than the 12-bit length (for example, 19 bits). Level adjustment performed by the level adjustment unit 16 for combination is performed on the short shutter signal with the long shutter signal as a reference.

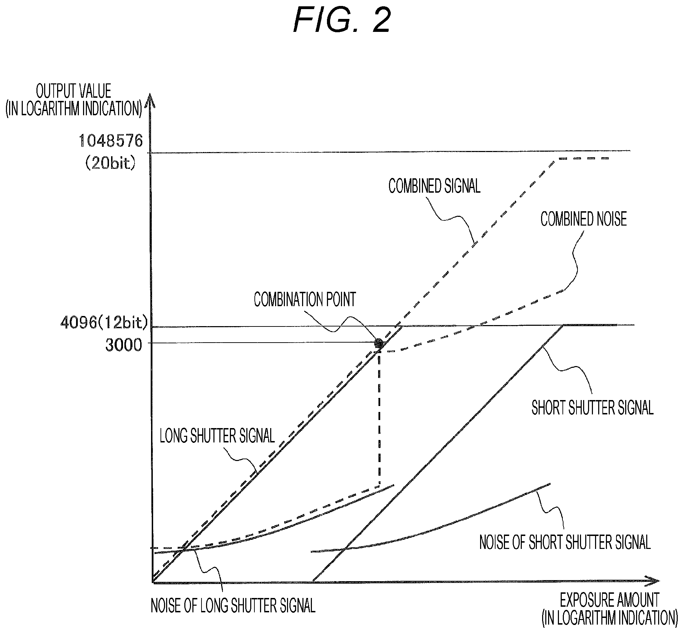

For example, when it is desired to combine the long shutter signal and the short shutter signal at a point where a gradation value of the long shutter signal is 3000 least significant bits (LSBs), the long shutter signal becomes the subsequently continuous input of the compression unit 18 until reaching 3000 LSBs, and the level adjustment unit 16 decompresses the short shutter signal by a shutter time ratio between the long shutter and the short shutter when a value of the long shutter signal exceeds 3000 LSBs. As a result, the short shutter signal is decompressed such that the value of the long shutter signal and a value of the decompressed short shutter signal corresponding to the same subject luminance (for example, a combination point in FIG. 2) approach the same value. This decompressed short shutter signal is input to the compression unit 18. A gradation value that is a boundary between the long shutter signal and the short shutter signal combined as above is called a combination point.

The combined signal is converted by the compression unit 18 from 19-bit length data to a signal having a shorter-bit length such as a 12-bit length. An exposure time ratio required for the decompression of the short shutter signal, HDR combination and compression, a value of the combination point, and compression characteristics are read from a combination/compression information storage unit 14.

The AD conversion circuit 15, the level adjustment unit 16, the HDR combination unit 17, the compression unit 18, and the combination/compression information storage unit 14 correspond to a signal processing unit configured to process a signal output from the image capture unit 12 (that is, an image sensor).

FIG. 2 is a graph illustrating an HDR combined signal and combined noise according to the first embodiment of the present invention.

The HDR combination of the short shutter signal and the long shutter signal and noise characteristics will be described with reference to the graph of FIG. 2. A horizontal axis of the graph is luminance of a captured subject, which is described as an exposure amount in FIG. 2. A vertical axis is a signal after AD conversion. This graph is a log-log graph with logarithm indications on both the horizontal axis and the vertical axis. Due to the indication with the double logarithm, the long shutter signal and the short shutter signal, and noise of the long shutter signal and noise of the short shutter signal each have a substantially parallel relation. Both the long shutter signal and the short shutter signal saturate at a gradation value of 4095 LSBs.

Since HDR combination is performed on the short shutter signal with the long shutter signal as the reference, the long shutter signal becomes a combined signal as it is when the long shutter signal is the combination point of 3000 LSBs or less, and a combined signal is obtained by multiplying the short shutter signal by the time ratio between the long shutter and the short shutter and conversion into a combined signal having a bit length longer than 12 bits is performed when the long shutter signal is the combination point of 3000 LSBs or more. Meanwhile, the noise of the short shutter signal is also multiplied by the time ratio between the short shutter and the long shutter, and thus, a portion of the combined noise, particularly derived from the low shutter signal, remarkably increases.

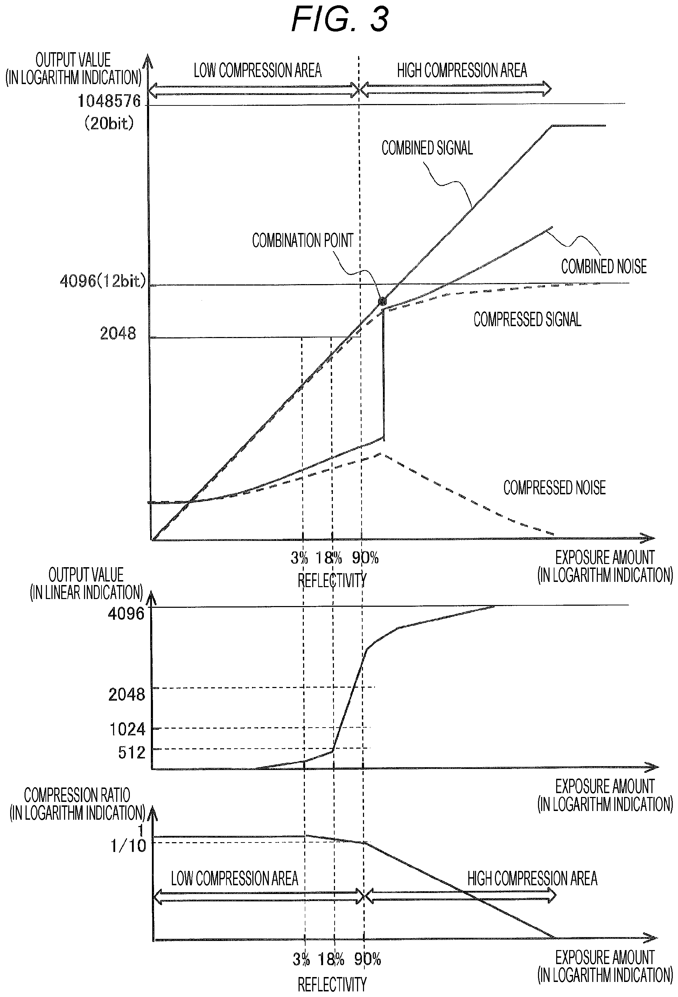

FIG. 3 is graphs illustrating an HDR compressed signal and compressed noise according to the first embodiment of the present invention.

With reference to FIG. 3, compression of a combined signal and compression of noise increased by the combination will be described. Horizontal axes of the graphs are all exposure amounts in logarithm indication for discussing a dynamic range. The upper graph illustrates a combined signal, combined noise, a compressed signal, and compressed noise with a vertical axis as gradations in logarithm indication in order to describe states of combination and compression. The middle graph illustrates a compressed signal in which a vertical axis is linearly indicated in order to discuss gradation allocation with respect to a logarithm of the exposure amount on the horizontal axis.

The lower graph illustrates a compression ratio with a vertical axis in logarithm indication. As for the compression characteristics, an area with a small exposure amount is set as an area mainly targeted at a reflective subject, the compression is suppressed to be low as 1/10 or more (that is, the compressed signal is smaller than a value before compression and is 1/10 or more of the value before compression), and a relatively large number of gradations are allocated to the logarithm of the exposure amount, instead of allocating gradations uniformly over the entire dynamic range expanded by HDR combination.

On the other hand, an area with a large exposure amount is set as an area mainly targeted at a light source subject and is subjected to high compression from 1/10 or less to a few hundredth or a few thousandth (that is, the compressed signal is 1/10 or less of a value before compression), and a smaller number of gradations is allocated to the logarithm of the exposure amount. In particular, as illustrated in the middle graph, gradations are allocated such that a gradation change becomes large in an area where the reflectance is 3% to 90%.

A boundary between a low compression area and a high compression area is set to luminance of a subject having reflectance from 85% to 95%.

Then, contrast when an image of the reflective subject is captured becomes high, and the object recognition and detection performance can be improved. Further, a noise component derived from the short shutter signal rapidly increased by the combination can be efficiently compressed by setting the combination point at which the short shutter signal and the long shutter signal are switched in the area of the light source subject with high compression.

In the first embodiment, the exposure control unit 13 controls the shutter time (that is, the exposure time) such that the image capture unit 12 outputs signals having different values (for example, the long shutter signal and the short shutter signal) for the same subject luminance (for example, the luminance of the combination point in FIG. 2). However, such a method is an example. For example, the exposure control unit 13 may also control an aperture value so that the image capture unit 12 can output signals having different values for the same subject luminance. In this case, an HDR image similar to that of the first embodiment can be obtained by treating a signal when the aperture is opened in the same manner as the long shutter signal described above and treating a signal when the aperture is stopped down in the same manner as the short shutter signal described above.

Further, the control of the shutter time and the control of the aperture value can be performed in combination.

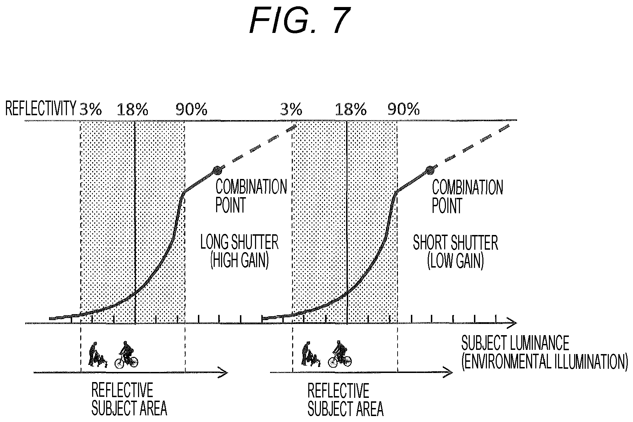

FIG. 7 is a view illustrating a method of controlling exposure using an exposure curve according to an embodiment of the present invention.

Here, a method in which the exposure control unit 13 controls exposure using an exposure curve illustrated in FIG. 3 will be described. In the present embodiment, a relation between a position of a combination point and a compression curve can always be kept constant if a shutter time ratio between a long shutter signal and a low shutter signal is kept constant. Therefore, it is possible to control the exposure in accordance with a dark scene by releasing the overall long shutter while keeping the shutter time ratio constant, and to control the exposure in accordance with a bright scene by releasing the overall short shutter. Further, the same can be applied by fixing the shutter and changing gains of the long shutter signal and the low shutter signal.

Incidentally, in the above method, the exposure (for example, shutter time) is controlled such that a ratio of values of a plurality of signals (for example, the long shutter signal and the short shutter signal) output for the same subject luminance is constant. Thus, control is performed such that the shutter time ratio is constant when the long shutter signal and the short shutter signal are output. On the other hand, control is performed such that a ratio of aperture values (for example, a ratio of the square of the f number) is constant when the signal at the time of opening the aperture and the signal at the time of stopping down the aperture are output.

### [Second Embodiment]

Next, a second embodiment of the present invention will be described. Except for differences to be described below, each unit of the image capture device 10 of the second embodiment has the same function as each unit denoted by the same reference sign in the first embodiment, and thus, the description thereof will be omitted.

In the first embodiment, the exposure amount (for example, the exposure time or the aperture value) is controlled such that the image capture unit 12 outputs signals having different values for the same subject luminance. On the other hand, two or more different gains are set for an image capture element in the second embodiment.

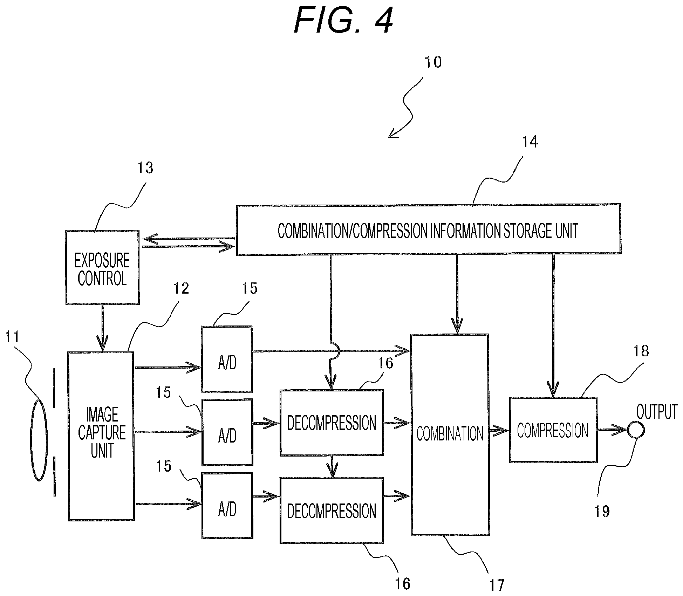

FIG. 4 is a block diagram illustrating a configuration of the image capture device 10 according to the second embodiment of the present invention.

The image capture device 10 of the second embodiment includes the lens 11 including an optical lens and an aperture, the image capture unit 12 including the image capture element such as a CCD or CMOS sensor, and the exposure control unit 13 that adjusts the aperture of the lens 11 and an exposure time and a gain of the image capture unit 12. The image capture unit 12 has a function of outputting three signals of a high-sensitivity signal (imaging signal with a high gain setting), a medium-sensitivity signal (imaging signal with a medium gain setting), and a low-sensitivity signal (imaging signal with a low gain setting) within one field period. The exposure time and analog gain processing are controlled by the exposure control unit 13.

Further, the three signals having the low sensitivity, the medium sensitivity, and the high sensitivity output from the image capture unit 12 are each converted into a 12-bit and 4096-gradation digital signal by the AD conversion circuit 15.

The signals with the three sensitivities each having the 12-bit length pass through a level adjustment unit 16 and are combined by an HDR combination unit 17 as one signal having a bit length longer than the 12-bit length (for example, 20 bits). Level adjustment performed by the level adjustment unit 16 for combination is performed on the medium-sensitivity signal and the low-sensitivity signal with the high-sensitivity signal as a reference.

For example, when it is desired to combine the high-sensitivity signal and the medium-sensitivity signal at a point where a gradation value of the high-sensitivity signal is 1000 LSBs and combine the medium-sensitivity signal and the low-sensitivity signal at a point where a gradation value of the medium-sensitivity signal is 3000 LSBs, the high-sensitivity signal becomes the subsequently continuous input of the compression unit 18 until the high-sensitivity signal reaches 1000 LSBs, and the medium-sensitivity signal decompressed by a gain ratio between the high-sensitivity signal and the medium-sensitivity signal by the level adjustment unit 16 is combined to be an input of the compression unit 18 until the medium-sensitivity signal reaches 3000 LSBs after the high-sensitivity signal exceeds 1000 LSBs. That is, as a result, the medium-sensitivity signal is decompressed such that a value of the high-sensitivity signal and a value of the decompressed medium-sensitivity signal corresponding to the same subject luminance (for example, a combination point 1 in FIG. 2) approach the same value. Further, after the medium-sensitivity signal exceeds 3000 LSBs, the medium-sensitivity signal decompressed by a gain ratio between the high-sensitivity signal and the low-sensitivity signal by the level adjustment unit 16 is combined to be an input of the compression unit 18. That is, as a result, the low-sense signal is decompressed such that a value of the high-sensitivity signal and a value of the decompressed low-sensitivity signal corresponding to the same subject luminance (for example, a combination point 2 in FIG. 2) approach the same, in other words, a value of the decompressed medium-sensitivity signal and a value of the decompressed low-sensitivity signal corresponding to the same subject luminance (for example, a combination point 2 in FIG. 2) approach the same. Gradation values at a boundary between the high-sensitivity signal and the medium-sensitivity signal to be combined as above and a boundary between the medium-sensitivity signal and the low-sensitivity signal are called combination points.

In the case of the present embodiment, there are two combination points. The combined signal is converted by the compression unit 18 from 20-bit length to a signal having a shorter-bit length such as a 12-bit length. An exposure time ratio required for extension of the short exposure time, HDR combination and compression, a value of the combination point, and compression characteristics are read from a combination/compression information storage unit 14.

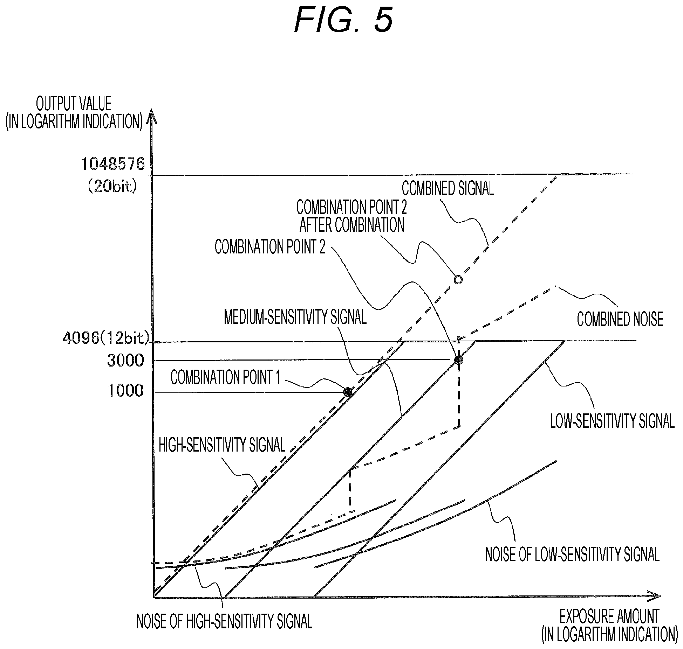

FIG. 5 is a graph illustrating an HDR combined signal and combined noise according to the second embodiment of the present invention.

HDR combination of the three signals of the low sensitivity, the medium sensitivity, and the high sensitivity and noise characteristics will be described with reference to the graph in FIG. 5. A horizontal axis of the graph is an exposure amount applied to a surface of the image capture element, which also corresponds to luminance of a captured subject. In FIG. 5, this is described as the exposure amount. A vertical axis is a signal after AD conversion. This graph is a log-log graph with logarithm indications on both the horizontal axis and the vertical axis. Due to the indication with the double logarithm, the three signals of the low sensitivity, the medium sensitivity, and the high sensitivity, and noise thereof have a substantially parallel relation. All the three signals of the low sensitivity, the medium sensitivity saturate at a gradation value of 4095 LSBs.

The HDR combination is performed on the medium-sensitivity signal and the low-sensitivity signal with the high-sensitivity signal as the reference. Further, the two combination points exist in the present embodiment. Thus, when the high-sensitivity signal is the combination point of 1000 LSBs or less, the high-sensitivity signal becomes the combined signal as it is. Until the high-sensitivity signal reaches 1000 LSBs or more and the medium-sensitivity signal reaches the combination point 3000 LSBs, the combined signal is obtained by multiplying the medium-sensitivity signal by the gain ratio between the high-sensitivity signal and the medium-sensitivity signal. When the medium-sensitivity signal is the combination point of 3000 LSBs or more, the combined signal is obtained by multiplying the low-sensitivity signal by the gain ratio between the high-sensitivity signal and the low-sensitivity signal.

Therefore, the combined signal is a signal having a bit length longer than 12 bits of the original high-sensitivity/medium-sensitivity/low-sensitivity signal. Meanwhile, the noise of each of the medium-sensitivity and low-sensitivity signals is also multiplied by each of the gain ratios between the high sensitivity and sensitivity and between the high sensitivity and the low sensitivity, and thus, a portion of the combined noise, particularly derived from the low-sensitivity signal, remarkably increases.

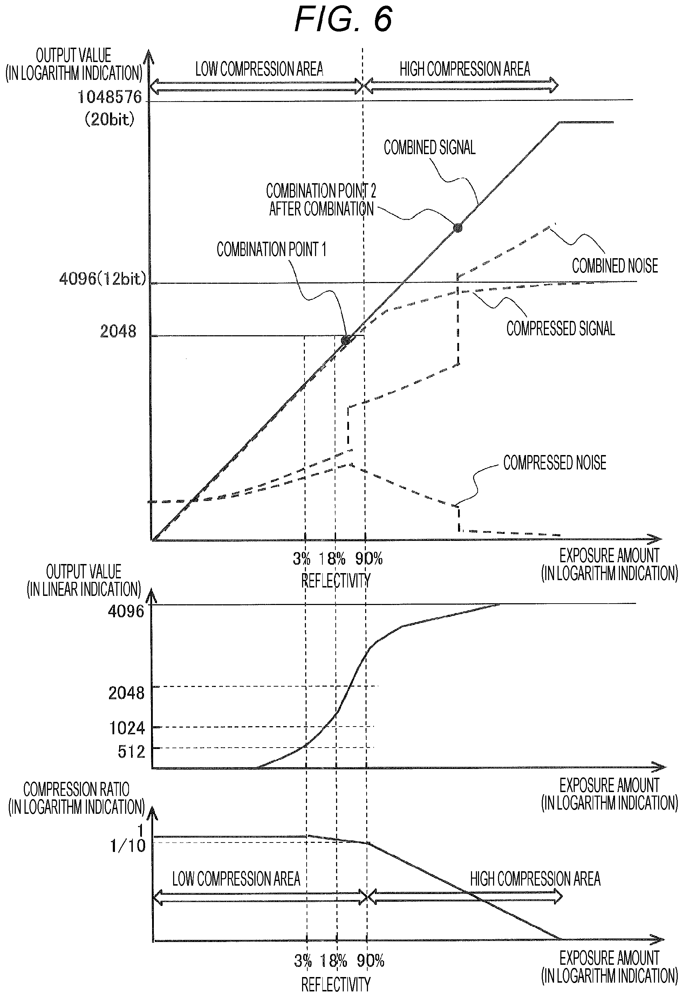

FIG. 6 is graphs illustrating an HDR compressed signal and compressed noise according to the second embodiment of the present invention.

With reference to FIG. 6, compression of a combined signal and compression of noise increased by the combination will be described. Horizontal axes of the graphs are all exposure amounts in logarithm indication for discussing a dynamic range. The upper graph illustrates a combined signal, combined noise, a compressed signal, and compressed noise with a vertical axis as gradations in logarithm indication in order to describe states of combination and compression. The middle graph illustrates a compressed signal in which a vertical axis is linearly indicated in order to discuss gradation allocation with respect to a logarithm of the exposure amount on the horizontal axis.

The lower graph illustrates a compression ratio with a vertical axis in logarithm indication. As for the compression characteristics, an area with a small exposure amount is set as an area mainly targeted at a reflective subject, the compression is suppressed to be low as 1/10 or more, and a relatively large number of gradations are allocated to the logarithm of the exposure amount, instead of allocating gradations uniformly over the entire dynamic range expanded by HDR combination.

On the other hand, an area with a large exposure amount is set as an area mainly targeted at a light source subject and is subjected to high compression from 1/10 or less to a few hundredth or a few thousandth, and a smaller number of gradations is allocated to the logarithm of the exposure amount. In particular, as illustrated in the middle graph, gradations are allocated such that a gradation change becomes large in an area where the reflectance is 3% to 90%. Then, contrast when an image of the reflective subject is captured becomes high, and the object recognition and detection performance can be improved.

Furthermore, the combination point at which the medium-sensitivity signal and the low-sensitivity signal are switched is set in the area of the light source subject with high compression (that is, a high compression area). Similarly, it is desirable to set the combination point at which the high-sensitivity signal and the medium-sensitivity signal are switched in the high compression area, but the combination point is set to a point closest to the high compression area in a low compression area when it is difficult to set the combination point in the high compression area due to the gain settings of the high-sensitivity signal and the medium-sensitivity signal. As a result, a noise component derived from the low-sensitivity signal and a noise component derived from the medium-sensitivity signal, which are rapidly increased by the combination, can be efficiently compressed.

This is because the noise component derived from the medium-sensitivity signal is multiplied by a relatively small ratio between the high sensitivity and the medium sensitivity while the noise component derived from the low-sensitivity signal is multiplied by a large ratio between the high sensitivity and the low sensitivity.

Here, a method of controlling exposure using an exposure curve illustrated in FIG. 6 will be described with reference to FIG. 7. In the present embodiment, a relation between a position of a combination point and a compression curve does not change even if a shutter time is changed as long as the gain settings of the low-sensitivity, medium-sensitivity, and high-sensitivity signals are kept constant. Therefore, it is possible to control the exposure by changing the shutter time. For example, the exposure control unit 13 may set the gains of the low-sensitivity, medium-sensitivity, and high-sensitivity signals as described above.

Although three types of signals of the low-sensitivity, medium-sensitivity, and high-sensitivity signals are output from the image capture unit 12 in the above-described second embodiment, for example, two types of the low-sensitivity signal and the high-sensitivity signal may be output. In this case, the high-sensitivity signal is treated in the same manner as the long shutter signal of the first embodiment, and the low-sensitivity signal is treated in the same manner as the short shutter signal of the first embodiment. That is, a combination point of the high-sensitivity signal and the low-sensitivity signal is set in the high compression area.

The image capture devices of the first embodiment and the second embodiment of the present invention described above include: an exposure control unit that determines exposure conditions from HDR image information of past several frames; an image capture unit that outputs a plurality of imaging signals in which at least any of sensitivities, shutter speeds, and aperture values are different; a storage unit that stores information related to combination and compression of the plurality of imaging signals; a level adjustment unit that decompresses and compresses the plurality of imaging signals before combining the imaging signals into one signal to adjust levels; a combination unit that combines a plurality of decompressed signals with the adjusted levels into one high dynamic range signal; and a compression unit that compresses the combined high dynamic range signal to a predetermined number of gradations.

The exposure control unit detects typical reflective subjects such as a road surface and a human face from HDR images of the past several frames and calculates a combination of the shutter speeds and a combination of gain values required for imaging on the premise of HDR combination and compression from gradation values of the subjects, an image under these conditions is captured by the image capture unit. The storage unit stores any gradation value with which each of the a plurality of image signals obtained under these imaging conditions is combined, and the level adjustment unit performs decompression according to a ratio of imaging signal values at a combination point, and adjusts the plurality of imaging signals to appropriate signal levels for monotonically increasing with respect to the exposure amount. The adjusted signals are combined by the combination unit so as to switch at the combination point. In the compression unit, compression characteristics are set based on information on the combination point at which the imaging signals are switched.

The compression characteristics are set so as not to compress uniformly over an exposure range, but to have the compression characteristics with a low compression area on a low gradation side and a high compression area on the high gradation side, and the combination point present in the high compression are on the high gradation side.

As a result, a signal of the reflective subject, which is the main subject of a scene, is compressed low, a gradation collapse due to the compression can be reduced, and the gradation distribution is appropriately performed. Therefore, it is possible to prevent the recognition and detection accuracy from deteriorating even in an image capture device that recognizes and detects an object. Further, it is possible to efficiently compress noise that increases due to the decompression during the combination by setting the combination point in the highly compressed area.

Incidentally, the present invention is not limited to the above-described embodiments, but includes various modifications. For example, the above-described embodiments have been described in detail in order to facilitate understanding of the present invention, and the invention is not necessarily limited to include the entire configuration described above. Further, some configurations of a certain embodiment can be replaced by configurations of another embodiment, and further, a configuration of another embodiment can be added to a configuration of a certain embodiment. Further, addition, deletion or substitution of other configurations can be made with respect to some configurations of each embodiment.

Further, a part or all of each of the above-described configurations, functions, processing units, processing means, and the like may be realized, for example, by hardware by being designed with an integrated circuit and the like. Further, the above-described respective configurations, functions and the like may be realized by software by the processor interpreting and executing a program for realizing the respective functions. Information such as programs, tables, and files that realize the respective functions can be stored in a storage device such as a nonvolatile semiconductor memory, a hard disk drive, and a solid state drive (SSD), or a computer-readable non-transitory data storage medium such as an IC card, an SD card, and a DVD.

Further, only control lines and information lines considered to be necessary for the description have been illustrated, and all of the control lines and information lines required as a product are not necessarily illustrated. It may be considered that most of configurations are practically connected to each other.

## Claims

1. An image capture device (10) comprising:
an image sensor (12);
an exposure control unit (13); and
a signal processing unit (14, 15, 16, 17, 18) that processes a signal output from the image sensor (12),
wherein the image sensor (12) outputs two or more signals having different values for same subject luminance, the image sensor (12) being controlled by the exposure control unit (13) by adjustment of an exposure time and a gain of the image sensor (12) for the two or more signals,
wherein the signal processing unit (14, 15, 16, 17, 18) is configured to:
decompress at least one of the two or more signals such that the values of the two or more signals for the same subject luminance approach a same value;
combine the two or more signals into a combined signal so as to switch which of the two or more signals is used as the combined signal at a combination point, the combination point being at a predetermined value of subject luminance; and
compress the combined signal according to compression characteristics relating the compression ratio and the subject luminance such that a compression ratio in a second range of the subject luminance, which is higher than a first range of the subject luminance, becomes higher in comparison with a compression ratio in the first range of the subject luminance; **characterised in that**:
the combination point is included in the second range of the subject luminance;
(i) wherein in the case where there are two signals, the exposure control unit (13) is configured to control the image sensor to maintain a constant relationship between a position of the combination point and the compression characteristics by maintaining a constant exposure time ratio between the two signals,
(ii) wherein in the case where there are more than two signals, the exposure control unit (13) is configured to maintain a constant relationship between a position of the combination point and the compression characteristics by changing the exposure times for the more than two signals and maintaining as constant the gain settings for the more than two signals.

2. The image capture device (10) according to claim 1, wherein
the image sensor (12) is configured to output two or more signals having different exposure times as the two or more signals having the different values for the same subject luminance.

3. The image capture device (10) according to claim 1, wherein
the image sensor (12) is configured to output two or more signals having different aperture values as the two or more signals having the different values for the same subject luminance.

4. The image capture device (10) according to claim 1, wherein
the image sensor (12) is configured to output two or more signals having different sensitivities as the two or more signals having the different values for the same subject luminance.

5. The image capture device (10) according to claim 1, wherein
compression is performed in the first range such that a compressed signal is larger than a tenth of an uncompressed signal, and compression is performed in the second range such that a compressed signal is equal to or smaller than a tenth of an uncompressed signal.

6. An image capture method using an image capture device (10) which includes an image sensor (12), an exposure control unit (13) and a signal processing unit (14, 15, 16, 17, 18) that processes a signal output from the image sensor (12), the image capture method comprising:
outputting, by the image sensor (12), two or more signals having different values for same subject luminance, the image sensor (12) being controlled by the exposure control unit (13) by adjustment of an exposure time and a gain of the image sensor (12) for the two or more signals;
decompressing, by the signal processing unit (14, 15, 16, 17, 18), at least one of the two or more signals such that the values of the two or more signals for the same subject luminance approach a same value;
combining, by the signal processing unit (14, 15, 16, 17, 18), the two or more signals into a combined signal so as to switch which of the two or more signals is used as the combined signal at one or more combination points, the one or more combination points being at predetermined values of subject luminance; and
compressing, by the signal processing unit (14, 15, 16, 17, 18), the combined signal according to compression characteristics relating the compression ratio and the subject luminance such that a compression ratio in a second range of the subject luminance, which is higher than a first range of the subject luminance, becomes higher in comparison with a compression ratio in the first range of the subject luminance,
**characterised in that**
at least one combination point is included in the second range of subject luminance, and
the image capture method (10) further comprises (i) in the case where there are two signals, the exposure control unit (13) controlling the image sensor to maintain a constant relationship between a position of the combination point and the compression characteristics by maintaining a constant exposure time ratio between the two signals, (ii) in the case where there are more than two signals, the exposure control unit (13) maintaining a constant relationship between a position of the combination point and the compression characteristics by changing the exposure times for the more than two signals
and maintaining as constant the gain settings for the more than two signals.

## Patentansprüche

1. Bildaufnahmevorrichtung (10), umfassend:
einen Bildsensor (12);
eine Belichtungssteuerungseinheit (13); und
eine Signalverarbeitungseinheit (14, 15, 16, 17, 18), die ein von dem Bildsensor (12) ausgegebenes Signal verarbeitet,
wobei der Bildsensor (12) zwei oder mehrere Signale mit verschiedenen Werten für dieselbe Objektleuchtdichte ausgibt, wobei der Bildsensor (12) durch die Belichtungssteuerungseinheit (13) durch Einstellen einer Belichtungszeit und einer Verstärkung des Bildsensors (12) für die zwei oder mehreren Signale gesteuert wird,
wobei die Signalverarbeitungseinheit (14, 15, 16, 17, 18) für Folgendes konfiguriert ist:
Dekomprimieren von zumindest einem aus den zwei oder mehreren Signalen, so dass die Werte der zwei oder mehreren Signale für dieselbe Objektleuchtdichte sich demselben Wert annähern;
Kombinieren der zwei oder mehreren Signale zu einem kombinierten Signal, um umzuschalten, welches der zwei oder mehreren Signale als das kombinierte Signal an einem Kombinationspunkt verwendet wird, wobei der Kombinationspunkt bei einem vorbestimmten Wert der Objektleuchtdichte liegt; und
Komprimieren des kombinierten Signals gemäß Kompressionscharakteristik betreffend das Kompressionsverhältnis und die Objektleuchtdichte, so dass ein Kompressionsverhältnis in einem zweiten Bereich der Objektleuchtdichte, der größer ist als ein erster Bereich der Objektleuchtdichte, verglichen mit einem Kompressionsverhältnis in dem ersten Bereich der Objektleuchtdichte größer wird;
**dadurch gekennzeichnet, dass**:
der Kombinationspunkt in dem zweiten Bereich der Objektleuchtdichte umfasst ist;
(i) wobei in dem Fall, dass zwei Signale vorliegen, die Belichtungssteuereinheit (13) konfiguriert ist, um den Bildsensor zu steuern, um eine konstante Beziehung zwischen einer Position des Kombinationspunkts und der Kompressionscharakteristik aufrechtzuerhalten, indem ein konstantes Belichtungszeitverhältnis zwischen den beiden Signalen aufrechterhalten wird,
(ii) wobei in dem Fall, dass mehr als zwei Signale vorliegen, die Belichtungssteuereinheit (13) konfiguriert ist, um eine konstante Beziehung zwischen einer Position des Kombinationspunkts und der Kompressionscharakteristik aufrechtzuerhalten, indem die Belichtungszeiten für die mehr als zwei Signale geändert und die Verstärkungseinstellungen für die mehr als zwei Signale als konstant aufrechterhalten werden.

2. Bildaufnahmevorrichtung (10) nach Anspruch 1, wobei
der Bildsensor (12) konfiguriert ist, um zwei oder mehrere Signale mit verschiedenen Belichtungszeiten als die zwei oder mehreren Signale mit verschiedenen Werten für dieselbe Objektleuchtdichte auszugeben.

3. Bildaufnahmevorrichtung (10) nach Anspruch 1, wobei
der Bildsensor (12) konfiguriert ist, um zwei oder mehrere Signale mit verschiedenen Blendenöffnungswerten als die zwei oder mehreren Signale mit verschiedenen Werten für dieselbe Objektleuchtdichte auszugeben.

4. Bildaufnahmevorrichtung (10) nach Anspruch 1, wobei
der Bildsensor (12) konfiguriert ist, um zwei oder mehrere Signale mit verschiedenen Empfindlichkeiten als die zwei oder mehreren Signale mit verschiedenen Werten für dieselbe Objektleuchtdichte auszugeben.

5. Bildaufnahmevorrichtung (10) nach Anspruch 1, wobei
die Kompression in dem ersten Bereich derart erfolgt, dass ein komprimiertes Signal größer als ein Zehntel eines nicht komprimierten Signals ist, und die Kompression in dem zweiten Bereich derart erfolgt, dass ein komprimiertes Signal gleich oder kleiner als ein Zehntel eines nicht komprimierten Signals ist.

6. Bildaufnahmeverfahren unter Verwendung einer Bildaufnahmevorrichtung (10), umfassend einen Bildsensor (12), eine Belichtungssteuerungseinheit (13) und eine Signalverarbeitungseinheit (14, 15, 16, 17, 18), die ein von dem Bildsensor (12) ausgegebenes Signal verarbeitet,
wobei das Bildaufnahmeverfahren Folgendes umfasst:
Ausgeben von zwei oder mehreren Signalen mit verschiedenen Werten für dieselbe Objektleuchtdichte durch den Bildsensor (12), wobei der Bildsensor (12) durch die Belichtungssteuerungseinheit (13) durch Einstellen einer Belichtungszeit und einer Verstärkung des Bildsensors (12) für die zwei oder mehreren Signale gesteuert wird,
Dekomprimieren von zumindest einem aus den zwei oder mehreren Signalen durch die Signalverarbeitungseinheit (14, 15, 16, 17, 18), so dass die Werte der zwei oder mehreren Signale für dieselbe Objektleuchtdichte sich demselben Wert annähern;
Kombinieren der zwei oder mehreren Signale zu einem kombinierten Signal durch die Signalverarbeitungseinheit (14, 15, 16, 17, 18), um umzuschalten, welches der zwei oder mehreren Signale als das kombinierte Signal an einem oder mehreren Kombinationspunkten verwendet wird, wobei der eine oder die mehreren Kombinationspunkte bei einem vorbestimmten Wert der Objektleuchtdichte liegen; und
Komprimieren des kombinierten Signals gemäß Kompressionscharakteristik betreffend das Kompressionsverhältnis und die Objektleuchtdichte durch die Signalverarbeitungseinheit (14, 15, 16, 17, 18), so dass ein Kompressionsverhältnis in einem zweiten Bereich der Objektleuchtdichte, der größer ist als ein erster Bereich der Objektleuchtdichte, verglichen mit einem Kompressionsverhältnis in dem ersten Bereich der Objektleuchtdichte größer wird;
**dadurch gekennzeichnet, dass**:
zumindest ein Kombinationspunkt in dem zweiten Bereich der Objektleuchtdichte umfasst ist;
wobei das Bildaufnahmeverfahren (10) ferner Folgendes umfasst:
(i) in dem Fall, dass zwei Signale vorliegen, Steuern des Bildsensors durch die Belichtungssteuereinheit (13), um eine konstante Beziehung zwischen einer Position des Kombinationspunkts und der Kompressionscharakteristik aufrechtzuerhalten, indem ein konstantes Belichtungszeitverhältnis zwischen den beiden Signalen aufrechterhalten wird,
(ii) in dem Fall, dass mehr als zwei Signale vorliegen, Aufrechterhalten einer konstanten Beziehung zwischen einer Position des Kombinationspunkts und der Kompressionscharakteristik durch die Belichtungssteuereinheit (13), indem die Belichtungszeiten für die mehr als zwei Signale geändert und die Verstärkungseinstellungen für die mehr als zwei Signale als konstant aufrechterhalten werden.

## Revendications

1. Dispositif de capture d'image (10), comprenant :
un capteur d'image (12) ;
une unité de commande d'exposition (13) ; et
une unité de traitement de signal (14, 15, 16, 17, 18) qui traite un signal en sortie du capteur d'image (12),
dans lequel le capteur d'image (12) délivre en sortie deux signaux ou plus présentant des valeurs différentes pour la même luminance de sujet, le capteur d'image (12) étant commandé par l'unité de commande d'exposition (13) par ajustement d'un temps d'exposition et d'un gain du capteur d'image (12) pour les deux signaux ou plus,
dans lequel l'unité de traitement de signal (14, 15, 16, 17, 18) est configurée pour :
décompresser au moins un des deux signaux ou plus de telle sorte que les valeurs des deux signaux ou plus pour la même luminance de sujet se rapprochent d'une même valeur ;
combiner les deux signaux ou plus en un signal combiné de manière à commuter celui des deux signaux ou plus qui est utilisé comme signal combiné au niveau d'un point de combinaison, le point de combinaison étant à une valeur prédéterminée de luminance de sujet ; et
compresser le signal combiné selon des caractéristiques de compression reliant le rapport de compression et la luminance de sujet de sorte qu'un rapport de compression dans une seconde plage de la luminance de sujet, qui est supérieure à une première plage de la luminance de sujet, devient supérieur par comparaison avec un rapport de compression dans la première plage de la luminance de sujet ;
**caractérisé en ce que** :
le point de combinaison est inclus dans la seconde plage de la luminance de sujet ;
(i) dans lequel dans le cas où il y a deux signaux, l'unité de commande d'exposition (13) est configurée pour commander le capteur d'image pour maintenir une relation constante entre une position du point de combinaison et les caractéristiques de compression en maintenant un rapport de temps d'exposition constant entre les deux signaux,
(ii) dans lequel dans le cas où il y a plus de deux signaux, l'unité de commande d'exposition (13) est configurée pour maintenir une relation constante entre une position du point de combinaison et les caractéristiques de compression en modifiant les temps d'exposition pour les plus de deux signaux et en maintenant constants les réglages de gain pour les plus de deux signaux.

2. Dispositif de capture d'image (10) selon la revendication 1, dans lequel
le capteur d'image (12) est configuré pour délivrer en sortie deux signaux ou plus présentant des temps d'exposition différents en tant que deux signaux ou plus présentant les valeurs différentes pour la même luminance de sujet.

3. Dispositif de capture d'image (10) selon la revendication 1, dans lequel
le capteur d'image (12) est configuré pour délivrer en sortie deux signaux ou plus présentant des valeurs d'ouverture différentes en tant que deux signaux ou plus présentant les valeurs différentes pour la même luminance de sujet.

4. Dispositif de capture d'image (10) selon la revendication 1, dans lequel
le capteur d'image (12) est configuré pour délivrer en sortie deux signaux ou plus présentant des sensibilités différentes en tant que les deux signaux ou plus présentant les valeurs différentes pour la même luminance de sujet.

5. Dispositif de capture d'image (10) selon la revendication 1, dans lequel
la compression est effectuée dans la première plage de telle sorte qu'un signal compressé soit supérieur à un dixième d'un signal non compressé, et la compression est effectuée dans la seconde plage de telle sorte qu'un signal compressé soit égal ou inférieur à un dixième d'un signal non compressé.

6. Procédé de capture d'image utilisant un dispositif de capture d'image (10) qui comprend un capteur d'image (12), une unité de commande d'exposition (13) et une unité de traitement de signal (14, 15, 16, 17, 18) qui traite un signal en sortie du capteur d'image (12), le procédé de capture d'image comprenant les étapes consistant à :
délivrer en sortie, par l'intermédiaire du capteur d'image (12), deux signaux ou plus présentant des valeurs différentes pour la même luminance de sujet, le capteur d'image (12) étant commandé par l'unité de commande d'exposition (13) par ajustement d'un temps d'exposition et d'un gain du capteur d'image (12) pour les deux signaux ou plus ;
décompresser, par l'intermédiaire de l'unité de traitement de signal (14, 15, 16, 17, 18), au moins un des deux signaux ou plus de telle sorte que les valeurs des deux signaux ou plus pour la même luminance de sujet se rapprochent d'une même valeur ;
combiner, par l'intermédiaire de l'unité de traitement de signal (14, 15, 16, 17, 18), les deux signaux ou plus en un signal combiné de manière à commuter celui des deux signaux ou plus qui est utilisé comme signal combiné en un ou plusieurs points de combinaison, les un ou plusieurs points de combinaison étant à des valeurs prédéterminées de luminance de sujet ; et
compresser, par l'intermédiaire de l'unité de traitement de signal (14, 15, 16, 17, 18), le signal combiné selon des caractéristiques de compression concernant le taux de compression et la luminance de sujet de telle sorte qu'un taux de compression dans une seconde plage de la luminance de sujet, qui est supérieure à une première plage de luminance de sujet, devienne supérieur par comparaison avec un taux de compression dans la première plage de la luminance de sujet,
**caractérisé en ce que**
au moins un point de combinaison est inclus dans la seconde plage de luminance de sujet, et
le procédé de capture d'image (10) comprend en outre
(i) dans le cas dans lequel il y a deux signaux, l'unité de commande d'exposition (13) commandant le capteur d'image pour maintenir une relation constante entre une position du point de combinaison et les caractéristiques de compression en maintenant un rapport de temps d'exposition constant entre les deux signaux,
(ii) dans le cas où il y a plus de deux signaux, l'unité de commande d'exposition (13) maintient une relation constante entre une position du point de combinaison et les caractéristiques de compression en modifiant les temps d'exposition pour les plus de deux signaux et en maintenant constants les réglages de gain pour les plus de deux signaux.
